# EUROPEAN PATENT APPLICATION

(11) **EP 0 995 942 A1**
(43) Date of publication of application: **26.04.2000**
(21) Application number: 99119656.9
(22) Date of filing: 11.10.1999
(51) Int. Cl.: F16P 3/14

(54) **Accident-prevention apparatus for the operator of a press brake**

(30) Priority: 21.10.1998 IT PN980075
(71) Applicant: Electrolux Zanussi Grandi Impianti S.p.A., 33170 Pordenone (IT)
(72) Inventor: Ballarin, Roberto, 30027 S.Donà di Piave (VE) (IT)
(74) Representative: Agostini, Agostino

(57) **Abstract**

Safety arrangement adapted to stop the travel, ie. operational movement of the moving parts (2, 5) of a press brake in the case of the press operator interfering with the travel, ie. operational movement of a tool (6) attached to said moving parts. It comprises emitting means (21) and receiving means (22) of light beams which are provided in a side-by-side arrangement on a side of the press, while, on the opposite side, there are provided reflecting means (26) adapted to convert the light beam (R_{E}.) generated and emitted by said emitting means (21) into a reflected beam (R_{R}) which is parallel thereto and lies closer to the operator than said emitted beam (R_{E}).

## Description

The present invention refers to an accident-prevention apparatus for use in a press brake.

A press brake is a machine in which the workpiece (which consists of a sheet-metal plate, eg. a sheet-steel plate) is deformed by the action of a tool, which is generally known as bending bar or punch, performing a relative movement with respect to a V-shaped or U-shaped matching surface, which is generally known as the bending die. The punch is fixed to a slide moving along the vertical, while the bending die is sustained by the bedplate or lower beam of the press.

Throughout the bending process, eg. in order to bend it on each one of its four sides through a corresponding sequence of operational phases, the workpiece is handled directly by the press operator who acts on a foot pedal in order to cause the slide to perform its downward stroke, ie. to move towards the bending die. Again, the upward stroke performed by the slide in order to release the workpiece after bending occurs either automatically or following a control command received from a second foot pedal actuated by the same operator.

In order to ensure an adequate level of safety to the operator during such a handling of the workpiece, the currently applicable regulations call for the bending bar or punch to be able to stop before fingers can be crushed in the case that the operator inadvertently lays a hand across the downstroke path of the slide. Actually, such a stop takes place at a distance of approx. 6 mm from the bending die.

A safety arrangement that is frequently used in press brakes comprises a light-emitting device on a side of the lower beam of the press and a light receiving device, connected to appropriate circuit means, on the other side in such a manner as to ensure that the related light beam lies exactly at a distance of 6 mm from the bending die. In the case that the hand of the operator intercepts the light beam, thereby preventing it from being received by said receiving device, the thereto connected circuit means cause the downstroke of the slide, and the punch, to be interrupted.

Such an arrangement is very simple, but fails to take into account the possibility for the hand of the operator to be laid or resting on a side of the bending punch during the downstroke thereof. In fact, it only considers the possibility for the hand of the operator to be resting on either the workpiece or the bending die, so that, under the circumstances, it actually proves partially ineffective. Owing to its inertia, the slide may in fact come to stop after that the bending punch has caused the hand of the operator to suffer some damage.

A more effective safety arrangement, as disclosed in US-A-4 166 369, comprises an array of light emitting devices aligned along the vertical and, on the opposite side of the press brake, a corresponding plurality of light receiving devices connected to a safety circuit under the interposition of a plurality of limit switches. In the zone comprised between the punch and the bending die, a plurality of horizontal light beams are in this manner obtained at a certain distance from the edge of the punch, on the side on which the press operator stands. However, the complexity of such an arrangement can be readily appreciated in connection not only with the adjustment that has to be performed each time that the punch is replaced (eg. in connection with changes in the type of workpiece bent in the press or the type of bending required), but also with maintenance requirements, considering that, in order to exactly ensure a maximum extent of safety, such a maintenance has to be carried out very frequently. The need arises in fact for both said light-emitting and said light-receiving devices to be each time repositioned both vertically and horizontally, ie. for an operation to be each time carried out which is not only delicate, but also rather expensive, since it is usually an operator possessing higher skins than a simple press operator that is charged with such a maintenance.

It therefore would be desirable, and it actually is a purpose of the present invention, to ensure the availability, in a press brake, of a safety arrangement that is effectively able to eliminate all possible risks of accident and injury for the operator, including the risk which is run when a hand of the operator remains resting on the punch during the downstroke thereof. This particular risk, although not of the utmost seriousness and quite often underestimated, is anyway unacceptable by any company that really wants to assure a maximum extent of safety to all of its employees.

A further purpose of the present invention is therefore to provide a safety arrangement for a press brake which is simple in its construction and just requires a maintenance that can be carried out simply and quickly.

A safety arrangement with the characteristics as recited in the appended claims enables this and further aims to be reached.

Anyway, features and advantages of the present invention will be more readily and clearly understood from the description of a preferred embodiment thereof that is given below by way of non-limiting example with reference to the accompanying drawings, in which:
- Figure 1 is a schematical front view of a press brake equipped with a safety arrangement according to the present invention;
- Figure 2 is a simplified cross-sectional view along the II-II plane of the press brake illustrated in Figure 1.

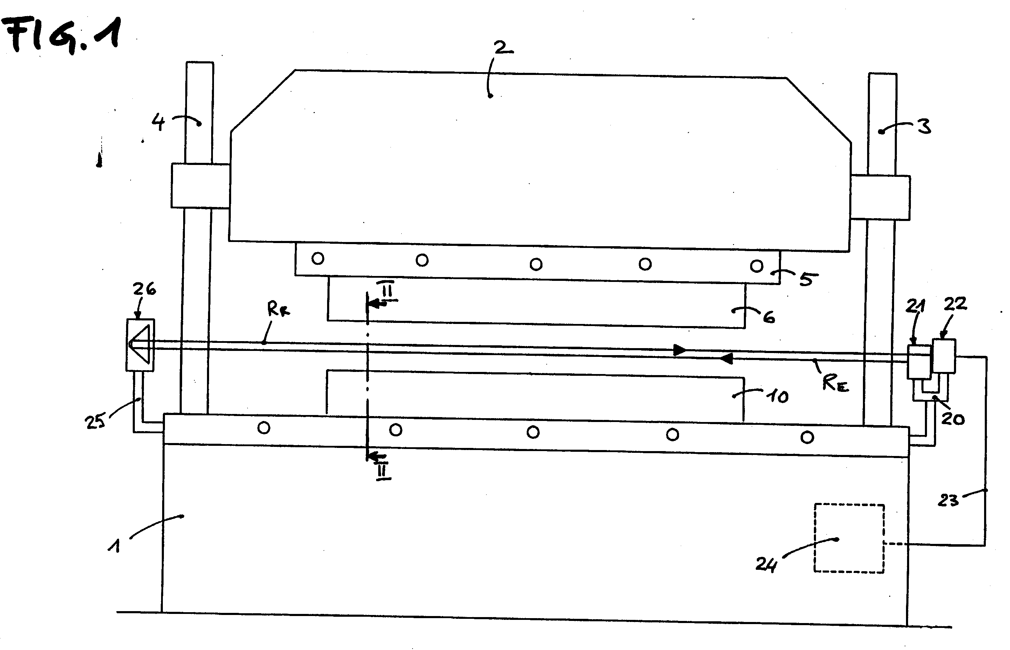

As shown in Figure 1, a press brake can be seen to substantially consist of a stationary rigid bed 1 and a portal 2 situated thereabove and sustained by side columns 3, 4 rising upwards from the bed 1. On the lower side of the portal 2 there is fixed a slide 5 with which it is adapted to move vertically, in particular downwards, when the operator acts on a corresponding foot pedal (not shown).

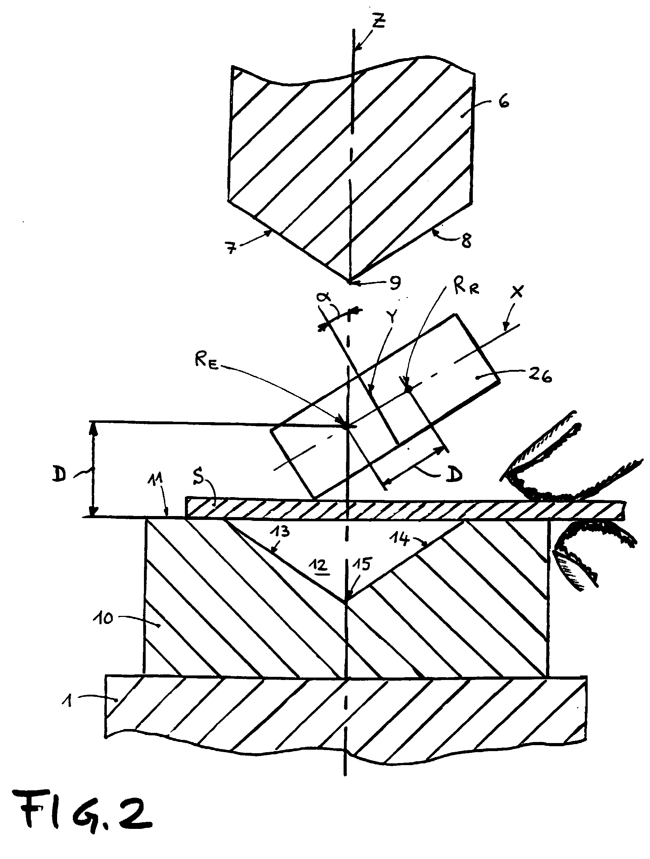

To the lower side of the slide 5 there is in turn fixed a bending punch or bar 6 having a V-shaped cross-section with two working surfaces 7, 8 and an edge 9 (see Figure 2). On the opposite side, ie. on the upper side of the bed 1 there is fixed a bending die 10 whose surface 11 facing upwards has a longitudinal recess 12 which has again a V-shaped cross-section with two side surfaces 13, 14 that are parallel to the working surfaces 7, 8 of the punch 6, and a bottom corner 15. The acute angle formed by each one of the surfaces 7, 8, 13 and 14 with a horizontal plane is generally indicated at α in the following description.

Figure 2 also illustrates the vertical plane Z that contains both the edge 9 of the punch 6 and the bottom corner 15 of the recess 12, along with a sheet-metal workpiece S that, held by the fingers of the operator, is placed upon the bending die 10 in order to undergo bending into a V-shape owing to the downward movement of the portal 2 along with the slide 5 and the punch 6, and the resulting cooperation of the surfaces 7, 8 of the punch with the surfaces 13, 14 of the recess 12.

By means of adjustable means 20, on the right-hand side of the bed 1 of the press there is fixed a first part of an optical array that, according to the present invention, consists of a laser beam emitting device 21 and a punctiform light beam receiving device 22 which are mutually staggered, ie. out of alignment, with respect to both a vertical plane Z and a horizontal plane. The receiving device 22 is furthermore connected via electric wires 23 to a safety circuit 24 of the press brake.

On the left-hand side of the press bed 1 there is in turn fixed, by means of adjustable means 25 that are similar to the above cited ones, a second part of said optical array which substantially consists of a Porro prism 26 (see Figure 1).

Porro prisms are commonly known to have the property of producing an emitted ("emerging") beam R_{E} that is perfectly parallel to the reflected ("incident") beam R_{R} when said beams lay on a plane that is perpendicular to the hypotenuse Y thereof.

As shown in Figure 2, the position of the prism 26 with respect to the positions of the light emitting device 21 and the light receiving device 22 has to be adjusted so as to ensure that:
- the beam R_{E} generated by the light emitting device 21 is horizontal and rectilinear at a distance D from the upper surface 11 of the bending die 10 that corresponds to the afore mentioned minimum safety distance (ie. 6 mm);
- the distance between the beams R_{E} and R_{R} is equal to said distance D;
- the plane X containing the beams R_{E} and R_{R} is parallel to the working surface of the punch 6 that is designated here with the reference numeral 8 and lies on the operator side of the press brake. In other words, the hypotenuse Y of the prism 26 must form, with the vertical plane Z containing both the edge 9 of the punch 6 and the bottom corner 15 of the die recess 12, exactly the same acute angle α as defined earlier in this description.

In a preferred manner, the emitted beam R_{E} lies on said plane Z, while the reflected beam R_{R} lies below said surface 8 of the punch 6.

The operation of the safety arrangement according to the present invention is as follows:

Should the emitted beam R_{E} be intercepted by the hand of the operator during the use of the press brake, the receiving device 22 of the optical array, owing to the reflected beam R_{R} so failing, is disenabled and the safety circuit 24 stops substantially instantly the downward movement, or downstroke, of the punch 6 in the same manner as this practically occurs in the afore discussed prior-art arrangements in compliance with the applying regulations. Furthermore, according to a basic feature of the present invention, should the fingers of the operator be inadvertently or absent-mindedly left resting on the surface 8 of the punch 6 during the downstroke thereof, they eventually intercept the reflected beam R_{R} even in advance of the edge 9 of the punch 6 succeeding in intercepting the emitted beam R_{E}. Also in this case the receiving device 22 of the optical array is therefore disenabled and the safety circuit 24 is therefore able to cause the downward movement of the punch 6 to stop within a more than adequate time delay even in the case that the moving speed of the slide is still relatively high, since the distance of the edge 9 from the die 10 is greater than the minimum distance D required by the regulations.

A first clear advantage of the present invention lies in the fact that the optical array is so simple in its construction that the adjustment and maintenance of the safety arrangement are operations that can be carried out in a most easy and quick manner even by people lacking adequate professional skills, ie. not specifically qualified or trained. Owing to the presence of a Porro prism, these operations, that usually require adjustments in the order of few millimeters, can in fact be performed only on one of the two pans forming the optical array.

A second, still greater advantage derives from the fact that the safety arrangement according to the present invention is actually capable of coping with all possible situations and circumstances, including those that have hitherto failed to be taken into account, or have been only marginally taken into account, by the applying standard regulations.

A further advantage lies in the fact that the present invention can be used on press brakes that are equipped with traditional safety systems through a simple replacement of the optical array, with no need for the existing safety circuit to be replaced and/or the software controlling said circuit to be modified.

A still further advantage lies in the fact that the emitted beam and the reflected beam are luminous and punctiform and, therefore, not only most accurate, but also visible to the operator who is in this way constantly reminded of and alerted on the presence and efficient state of the safety arrangement.

Although the above description has been given with reference to a preferred embodiment, it will be appreciated that it is within the ability of those skilled in the art to use the related teaching in order to introduce a number of modified embodiments of the above safety arrangement without departing from the scope of the present invention. In particular, a lower-cost embodiment might be based on the utilization of two plane mirrors in an angled arrangement with a common corner, instead of the afore cited Porro prism.

## Claims

1. Safety arrangement adapted to be fixed to a stationary part (1) of a press brake and comprising light-beam emitting means (21) and light-beam receiving means (22), in which said receiving means (22) are capable of being connected to circuit means (24) that are adapted to stop the working movement of the moving parts (2, 5) of the press brake in the case that the light beam is intercepted by the operator, **characterized in that** said emitting means (21) and said receiving means (22) are arranged beside each other on a side of the press brake, and that reflecting means (26) are provided on the opposite side that are adapted to convert the light beam (R_{E}) generated and emitted by said emitting means (21) into a reflected light beam (R_{R}) that is parallel to and lies closer to the operator than said emitted light beam (R_{E}).

2. Safety arrangement according to claim 1, in which to the moving part (2) of the press brake there is fixed a punch or bending bar (6) and to the stationary part (1) of the same press brake there is fixed a cooperating surface or bending die (10), **characterized in that** said reflecting means (26) consist substantially of a Porro prism.

3. Safety arrangement according to claim 1, **characterized in that** said reflecting means (26) comprise a pair of mirror-like reflecting plane surfaces in an angled arrangement with a common corner.

4. Safety arrangement according to any of the preceding claims, **characterized in that** the light beam (R_{E}) emitted by said emitting means (21) and the beam (R_{R}) reflected by said reflecting means (26) are punctiform, and that said beams (R_{E}, R_{R}) are arranged so that the plane (X) containing them is parallel to the working surface (8) of the bending punch (6) that lies on the operator side of the press brake.

5. Safety arrangement according to claim 4, **characterized in that** said emitting means (21) and said receiving means (22) are mutually staggered with respect to both the plane (Z) containing the lower corners (9, 15) of the punch (6) and the die (10), respectively, and a plane that is perpendicular thereto and contains one of said beams (R_{E}, R_{R}).

6. Safety arrangement according to claim 5, **characterized in that** the light beam (R_{E}) emitted by said emitting means (21) is contained in said plane (Z) that contains the lower corners (9, 15) of the punch (6) and the die (10), respectively.

7. Safety arrangement according to any of the preceding claims, **characterized in that** said emitting means (21) and said receiving means (22) form a first part of an optical array, and that adjustable means (20) are provided to fix this first part of said optical array to the stationary part (1) of the press brake.

8. Safety arrangement according to any of the preceding claims, **characterized in that** said reflecting means (26) form a second part of an optical array, and that adjustable means (25) are provided to fix this second part of said optical array to the stationary part (1) of the press brake.

9. Safety arrangement according to any of the preceding claims, **characterized in that** said emitting means (21) consist of a laser beam generator.
